# EUROPEAN PATENT APPLICATION

(11) **EP 4 089 523 A1**
(43) Date of publication of application: **16.11.2022**
(21) Application number: 21173144.3
(22) Date of filing: 10.05.2021
(51) Int. Cl.: G06F 3/16

(54) **MEDICAL SYSTEM AND METHOD**

(71) Applicant: Koninklijke Philips N.V., 5656 AG Eindhoven (NL)
(72) Inventor: GREINER, Harald, 5656 AE Eindhoven (NL)
(74) Representative: Philips Intellectual Property & Standards

(57) **Abstract**

A medical system (100) comprising a plurality of medical devices (110) and a control device (200) is provided. The control device (200) comprises a voice input unit (115) configured to receive a voice input (112) and a processor (125) configured to communicate with the voice input unit (115). The processor (125) is configured to transmit a query signal (116) corresponding to the voice input (112) to at least one medical device and receive a response signal (120) from the at least one medical device in response to the query signal (116). The response signal (120) comprises a negative response (122) if the at least one medical device is incapable of performing a predetermined action (150) or a positive response (124) if the at least one medical device is capable of performing the predetermined action (150). The processor (125) is configured to transmit a command signal (130) to the at least one medical device upon receiving the response signal (120) comprising the positive response (124) from the at least one medical device.

## Description

### FIELD OF THE INVENTION

The present invention relates generally to a medical system and a computer-implemented method, and in particular, to a medical system and a computer-implemented method for controlling a plurality of medical devices located in a same environment based on voice inputs.

### BACKGROUND OF THE INVENTION

Nowadays, there is an increase in demand of devices comprising a voice recognition function for receiving an input of control commands. This is generally due to their convenience of use. Since the input of control commands for such devices is a voice input, the devices may not require a manual input, such as a hand-operated input. Therefore, the devices comprising the voice recognition function may be suitable for use in a professional environment, such as a clinical environment. In some cases, a plurality of devices may be disposed in a same location. For example, the plurality of devices may be disposed in an operating room. This may lead to a difficulty in controlling the plurality of devices in the same location. In some cases, multiple devices from the plurality of devices disposed in the same location may individually attempt to perform an action or function in response to a same voice input. Further, it may be difficult to determine which device should perform the action in response to the voice input. Conventionally, a user, for example, a doctor, a nurse, or any other medical professional, is required to specify which device from the plurality of devices should perform the action. In some other cases, different wake up words (WUW) may be used for different devices to specify which device should perform the action. However, the user may have to remember and correctly utilize the different wake up words for different actions. Further, an incorrect action may be performed if the user erroneously utilizes the wake up words. In some cases, a system may be used to select a device based on predetermined and/or stored attributes corresponding to the devices, and to transmit a command to the selected device to perform the action. However, the action may not be performed if the specified or the selected device is incapable or unable to perform the action. Further, the system may be unable to adapt to any sudden or unexpected changes in various attributes of the devices.

US 2019/0115025 A1 discloses selectively performing voice recognition using one device among multiple devices that recognize and execute the voice recognition based on at least one of apparatus information of the multiple devices and a function parsed from a result of the voice recognition. Thereby, only a single preferable device in an environment in which multiple devices exist, which can service the user input via voice recognition, actually responds to the voice input and services the voice input of the user.

WO 2021/010193 A1 discloses a medical instrument control system, a control device, and a control method, for making it possible to rapidly execute processing that can be executed through use of a voice user interface (UI). A voice recognition unit recognizes a voice from a voice input unit, an instrument control unit controls execution of processing in a medical instrument on the basis of the result of voice recognition, and a display control unit controls display, on a display unit, of display information corresponding to the processing that is executed on the basis of the recognition result. The instrument control unit controls execution of processing that corresponds to selected display information when displayed display information is selected. The medical instrument control system can be applied to an operating room system.

### SUMMARY OF THE INVENTION

As noted above, there are a number of disadvantages associated with the currently available techniques for controlling a plurality of devices comprising a voice recognition function in a same location or environment. For example, there may be a difficulty in selecting which device from the plurality of devices should perform a desired action in response to a voice input. In addition, the desired action may not be performed if the selected device from the plurality of devices is incapable or unable to perform the desired action. It would therefore be advantageous to provide an improved, reliable, and dynamic medical system and a method for controlling a plurality of medical devices, so as to reduce a likelihood of the desired action not being performed in a professional environment, such as a clinical environment.

To better address one or more of the concerns mentioned earlier, in a first aspect, a medical system is provided. The medical system comprises a control device and a plurality of medical devices. The control device comprises a voice input unit configured to receive a voice input and a processor configured to communicate with the voice input unit and the plurality of medical devices. The processor is configured to: transmit a query signal corresponding to the voice input to at least one medical device from the plurality of medical devices; receive a response signal from the at least one medical device in response to the query signal, wherein the response signal comprises a negative response if the at least one medical device is incapable of performing a predetermined action in response to the voice input, or a positive response if the at least one medical device is capable of performing the predetermined action in response to the voice input; and transmit a command signal to the at least one medical device upon receiving the response signal comprising the positive response from the at least one medical device, wherein the at least one medical device is configured to perform the predetermined action upon receiving the command signal.

In some embodiments, the processor may be further configured to transmit the query signal to at least one remaining medical device from the plurality of medical devices upon receiving the response signal comprising the negative response from the at least one medical device; receive a response signal from the at least one remaining medical device in response to the query signal, wherein the response signal comprises a negative response if the at least one medical device is incapable of performing a predetermined action in response to the voice input, or a positive response if the at least one medical device is capable of performing the predetermined action in response to the voice input; and transmit the command signal to the at least one remaining medical device upon receiving the response signal comprising the positive response from the at least one remaining medical device.

In some embodiments, the at least one medical device may comprise each of the plurality of medical devices, and wherein the processor may be further configured to timely parallelly transmit the query signal corresponding to the voice input to each of the plurality of medical devices; and receive the response signal from each of the plurality of medical devices in response to the query signal, the response signal comprising the negative response if a corresponding medical device from the plurality of medical devices is incapable of performing the predetermined action in response to the voice input, or the positive response if the corresponding medical device is capable of performing the predetermined action in response to the voice input.

In some embodiments, the processor may be further configured to receive a response signal comprising the positive response from each of a set of medical devices from the plurality of medical devices; select one medical device from the set of medical devices based on at least one parameter; and transmit the command signal to the one medical device from the set of medical devices.

In some embodiments, the at least one parameter may comprise a user input, a prior history of selection, a predetermined hierarchy of the set of medical devices, a time of installation of each of the set of medical devices, a type of connection between the processor and each of the set of medical devices, a proximity of each of the set of medical devices to the voice input unit, and/or a proximity of each of the set of medical devices to a desired location for performing the predetermined action.

In some embodiments, the processor may be further configured to, upon receiving the response signal comprising the negative response from the at least one medical device, timely sequentially transmit the query signal to remaining medical devices from the plurality of medical devices if the response signal from a previous medical device from the remaining devices comprises the negative response; and transmit the command signal to one of the remaining medical devices if the response signal from the one of the remaining medical devices comprises the positive response.

In some embodiments, the processor may be further configured to generate a transcription based on the voice input; and generate the query signal based on the transcription.

In some embodiments, the processor may be further configured to generate a synthesized speech signal based on the transcription. In these embodiments, the query signal may comprise the synthesized speech signal.

In some embodiments, one of the plurality of medical devices may be the control device.

In a second aspect, a computer-implemented method for controlling a plurality of medical devices is provided. The computer-implemented method comprises receiving a voice input; transmitting a query signal corresponding to the voice input to at least one medical device from the plurality of medical devices; receiving a response signal from the at least one medical device in response to the query signal, wherein the response signal comprises a negative response if the at least one medical device is incapable of performing a predetermined action in response to the voice input, or a positive response if the at least one medical device is capable of performing the predetermined action in response to the voice input; and transmitting a command signal to the at least one medical device upon receiving the response signal comprising the positive response from the at least one medical device, wherein the at least one medical device is configured to perform the predetermined action upon receiving the command signal.

In some embodiments, the computer-implemented method may further comprise transmitting the query signal to at least one remaining medical device from the plurality of medical devices upon receiving the response signal comprising the negative response from the at least one medical device; receiving a response signal from the at least one remaining medical device in response to the query signal, wherein the response signal comprises a positive response if the at least one remaining medical device is capable of performing a predetermined action in response to the voice input, or a negative response if the at least one remaining medical device is incapable of performing the predetermined action; and transmitting the command signal to the at least one remaining medical device upon receiving the response signal comprising the positive response from the at least one remaining medical device.

In some embodiments, transmitting the query signal corresponding to the voice input to the at least one medical device from the plurality of medical devices may comprise timely parallelly transmitting the query signal corresponding to the voice input to each of the plurality of medical devices; and receiving the response signal from the at least one medical device in response to the query signal may comprise receiving the response signal from each of the plurality of medical devices in response to the query signal, wherein the response signal comprises the negative response if a corresponding medical device from the plurality of medical devices is incapable of performing the predetermined action in response to the voice input, or the positive response if the corresponding medical device is capable of performing the predetermined action in response to the voice input.

In some embodiments, the computer-implemented method may further comprise receiving a response signal comprising the positive response from each of a set of medical devices from the plurality of medical devices; selecting one medical device from the set of medical devices based on at least one parameter; and transmitting the command signal to the one medical device from the set of medical devices.

In some embodiments, the computer-implemented method may further comprise, upon receiving the response signal comprising the negative response from the at least one medical device, timely sequentially transmitting the query signal to remaining medical devices from the plurality of medical devices if the response signal from a previous medical device from the remaining devices comprises the negative response; and transmitting the command signal to one of the remaining medical devices if the response signal from the one of the remaining medical devices comprises the positive response.

In a third aspect, a computer program product is provided. The computer program product has computer readable code embodied therein, the computer readable code being configured such that, on execution by a suitable computer or processing unit, the computer or processing unit is caused to perform the computer-implemented method of the second aspect.

According to the aspects and embodiments described above, the limitations of existing techniques are addressed. In particular, the above-described aspects and embodiments may provide a unified control of a plurality of medical devices in a same environment. Further, the above-described aspects and embodiments may reduce a likelihood of a predetermined action not being performed in the environment upon receiving a voice input. This may be achieved by dynamically selecting a medical device from the plurality of medical devices to perform the predetermined action based on the voice input. Specifically, a medical device may not be selected to perform the predetermined action if a response signal, received from the medical device, in response to a query signal comprises a negative response indicative of the medical device being incapable of performing the predetermined action. The device may be incapable of performing the predetermined action due to various reasons, such as, the medical device may not be configured to perform the predetermined action, and/or the medical device is in a non-functional state/condition. For example, the non-functional state/condition of the medical device may comprise an off state, a disabled state, a low battery power state, a maintenance state, or a faulty state. A medical device is only selected to perform the predetermined action if the response signal, received from the medical device, in response to the query signal comprises a positive response indicative of the medical device being capable of performing the predetermined action, i.e., the medical device is configured to perform the predetermined action as well as in a functional state/condition.

The above-described aspects and embodiments may be able to adapt to any sudden or unexpected changes in various attributes of the medical devices as the selection of the medical devices is not solely based on any predetermined and/or stored device attributes, but primarily based on active querying. For example, it may not be possible to update the stored device attributes continuously and correctly in dynamically changing professional environments, and hence, there may be a possibility of a desirable action not being performed if the selection of the medical devices is solely based on stored device attributes. However, selection of the medical devices based on active querying may not be susceptible to sudden or unexpected changes in such professional environments. Further, the selection of the medical devices based on active querying may not require a user to remember different wake up words corresponding to different medical devices.

These and other aspects of the disclosure will be apparent from and elucidated with reference to the embodiment(s) described hereinafter.

### BRIEF DESCRIPTION OF THE DRAWINGS

Same reference numerals refer to same elements or elements of similar function throughout the various figures. Furthermore, only reference numerals necessary for the description of the respective figure are shown in the figures. The shown embodiments represent only examples of how the invention can be carried out. This should not be construed as a limitation of the invention.

For a better understanding of the invention, and to show more clearly how it may be carried into effect, reference will now be made, by way of example only, to the accompanying drawings, in which:
Fig. 1 is a schematic block diagram of a medical system, according to an embodiment;
Figs. 2A, 2B and 2C are schematic block diagrams representing exemplary steps for controlling the plurality of medical devices, according to an embodiment;
Fig. 3A is a schematic block diagram of the medical system, according to another embodiment;
Fig. 3B is a schematic block diagram of the medical system, according to another embodiment;
Figs. 4A and 4B are schematic block diagrams representing exemplary steps for controlling the plurality of medical devices, according to another embodiment;
Fig. 5A is a schematic block diagram of various parameters for selecting one medical device from a set of medical devices;
Figs. 5B to 5G are schematic block diagrams of parameters stored in a memory;
Figs. 6A and 6B are schematic block diagrams illustrating generation of a transcription and generation of a synthesized speech signal, respectively, according to an embodiment;
Fig. 7 is schematic block diagram of the medical system, according to another embodiment; and
Fig. 8 is flowchart for a computer-implemented method of controlling a plurality of medical devices, according to an embodiment.

### DETAILED DESCRIPTION OF EMBODIMENTS

As noted above, there is provided an improved, reliable, and dynamic medical system and a computer-implemented method corresponding the same which addresses the existing problems. "Signal," as used herein, includes, but is not limited to, one or more electrical signals, optical signals, electromagnetic signals, analog and/or digital signals, one or more computer instructions, a bit and/or bit stream, or the like.

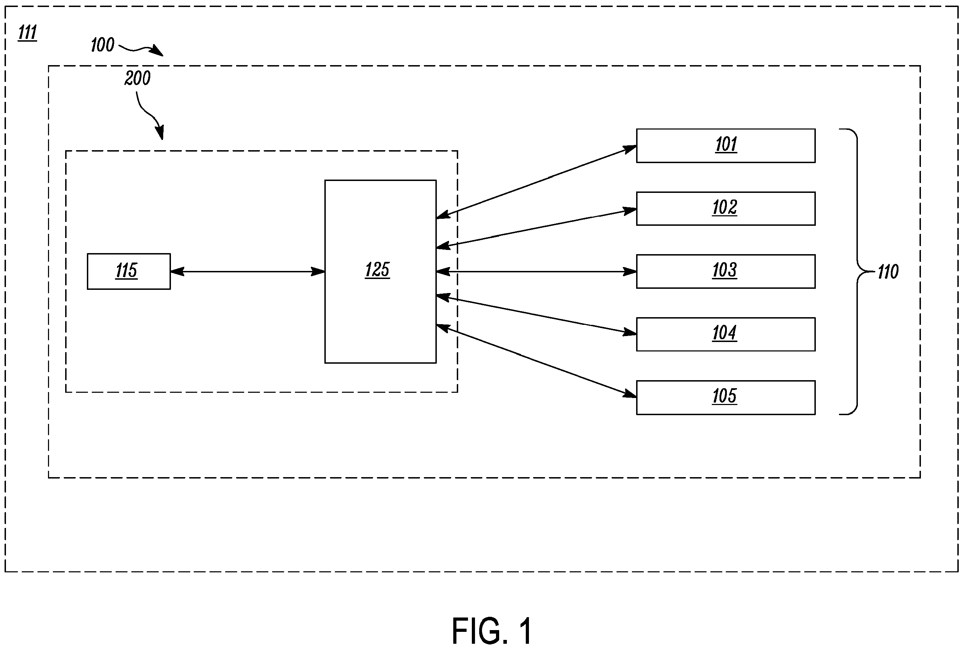

Fig. 1 shows a schematic block diagram of a medical system 100 according to an embodiment. The medical system 100 comprises a control device 200 and a plurality of medical devices 101, 102, 103, 104, 105 (collectively, the plurality of medical devices 110). The control device 200 comprises a voice input unit 115 and a processor 125. The medical system 100 allows control of the plurality of medical devices 101, 102, 103, 104, 105. In the illustrated embodiment of Fig. 1, five medical devices are shown. However, in some other embodiments, the medical system 100 may comprise any number of medical devices as per application requirements.

As shown, the plurality of medical devices 110 are disposed in a same environment 111. In some embodiments, the environment 111 is a professional environment, such as a clinical environment. For example, the environment 111 may be an operating room, a specific location, a space, or an area within a medical facility.

In some embodiments, the plurality of medical devices 110 may be different types of medical devices. In some other embodiments, at least two of the plurality of medical devices 110 may be of a same type of medical device. In some embodiments, the plurality of medical devices 110 may comprise any type of medical devices or instruments located in the environment 111, such as the clinical environment. The plurality of medical devices 110 may be used for one or more medical procedures by a user. In some embodiments, the user may be a doctor, a nurse, or any other medical professional. In some embodiments, the user may be a patient.

In some embodiments, each of the plurality of medical devices 110 may comprise a microphone. However, in some other embodiments, one or more medical devices from the plurality of medical devices 110 may not comprise a microphone. In some embodiments, one or more medical devices from the plurality of medical devices 110 may comprise an external microphone. In some embodiments, one or more of the plurality of medical devices 110 may comprise an imaging device used to capture a medical image based on various imaging techniques, such as x-ray imaging, computed tomography (CT) scan, and magnetic resonance imaging (MRI). In some embodiments, one or more of the plurality of medical devices 110 may comprise a camera configured to capture and/or record information during a medical procedure in the environment 111.

In some embodiments, one or more of the plurality of medical devices 110 may comprise a display, an audio output device (e.g., a speaker), and/or an audio-visual device. In some examples, the display, the audio output device, and/or the audio-visual device may be configured to provide information to guide/navigate the user through the medical procedure. In some examples, the display may be configured to display information captured and/or recorded by the camera during the medical procedure. In some embodiments, one or more of the plurality of medical devices 110 may comprise a sensor configured to measure and/or monitor a clinical parameter indicative of a health condition of the patient. For example, the sensor may be configured to measure a heart rate, a blood pressure, a blood sugar, a body weight, and/or a body temperature of the patient.

In some embodiments, one or more of the plurality of medical devices 110 may comprise a bed of the patient. In some embodiments, one or more of the plurality of medical devices 110 may comprise a light source. In some examples, the light source may be detachably attached to a medical apparatus.

In some embodiments, one or more of the plurality of medical devices 110 may comprise a printer. In some examples, the printer may be configured to print information related to a medical procedure (e.g., a surgery) in various formats, such as texts, images, and/or graphs.

In some embodiments, one or more of the plurality of medical devices 110 may be a mobile robotic device configured to carry one or more articles in the environment 111. The mobile robotic device may comprise a wheeled robot, a legged robot, an unmanned aerial vehicle, and so forth.

The medical system 100 comprises a voice input unit 115 and a processor 125. In some embodiments, the voice input unit 115 may comprise one or more microphones. In some examples, the voice input unit 115 may comprise a single microphone or a microphone array. In some embodiments, the voice input unit 115 may comprise directional or omnidirectional microphones. In some embodiments, the voice input unit 115 may be located in a center or at some other suitable location of the environment 111. In some embodiments, the voice input unit 115 may be detachably attached to one of walls of the environment 111.

The processor 125 is configured to communicate with the voice input unit 115 and the plurality of medical devices 110. In some embodiments, the processor 125 may comprise one or more processors, processing units, multi-core processors or modules that are configured or programmed to control elements of the medical system 100 in the manner described herein.

In some embodiments, the processor 125 may comprise a communication unit (not shown) in order to communicate with the voice input unit 115 and the plurality of medical devices 110 via a wired and/or wireless network. In some embodiments, the communication unit may comprise a receiver and a transmitter. In some embodiments, the receiver may be coupled to a receiving antenna and the transmitter may be coupled with a transmitting antenna.

The network may transmit computer program instructions, data structures, program modules or other data over a wired or wireless substance by propagating a modulated data signal, such as a carrier wave or other transport mechanism, over the wired or wireless substance. The term "modulated data signal", as used herein, means a signal that has one or more of its characteristics set or changed in such a manner as to encode information in the signal, thereby changing the configuration or state of the receiving device of the signal.

In some embodiments, the network may comprise a radio frequency network, or a cellular network, such as global system for mobile communications (GSM), general packet radio service (GPRS), 3G, evolution-Data Optimized (EVDO), long-Term Evolution (LTE), 4G, 5G, mesh, or any other network. In some embodiments, the network may comprise a Bluetooth^{®}, Near Field Communication (NFC) network, mesh network, infrared, ultraband, intranet, internet, and so forth.

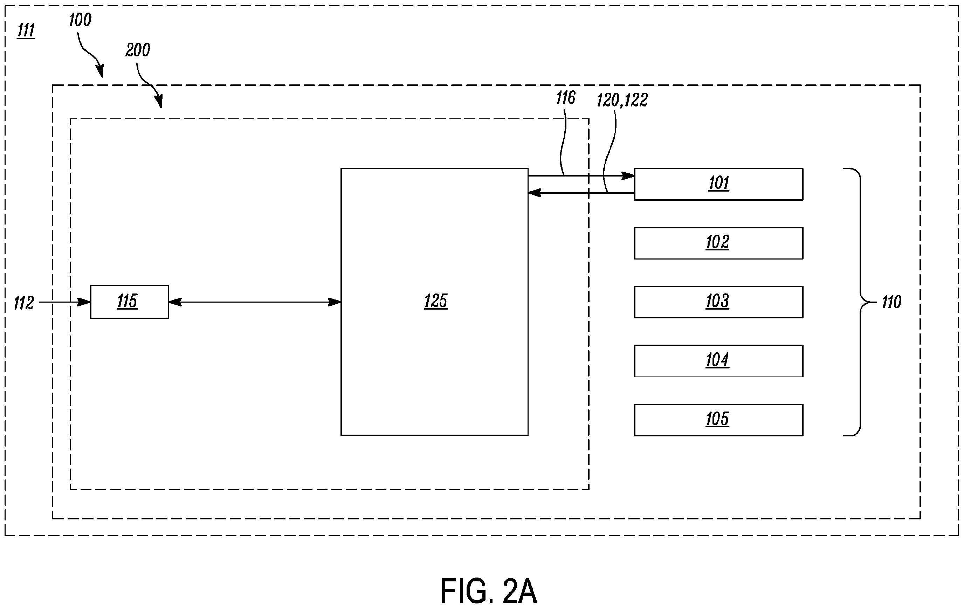

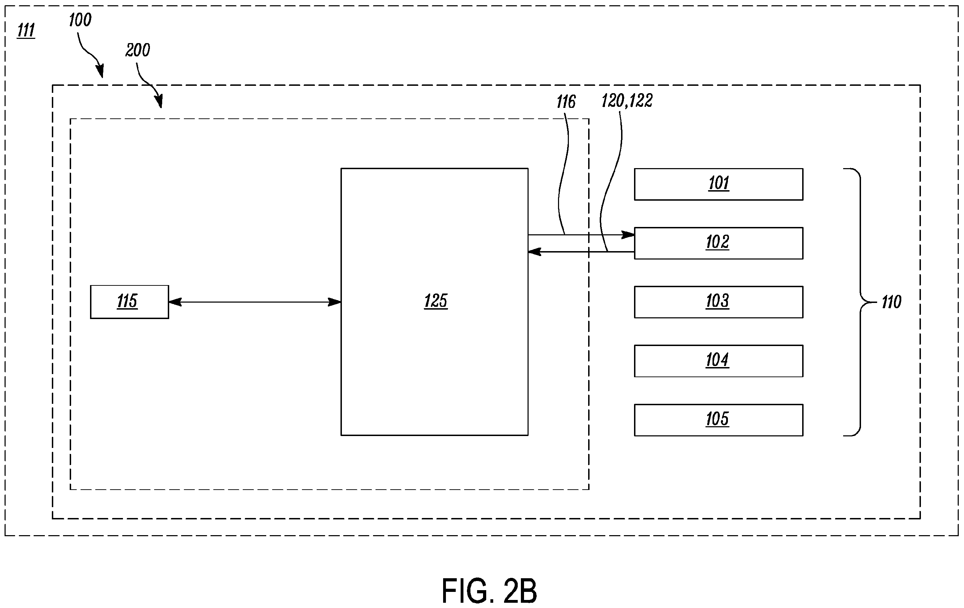

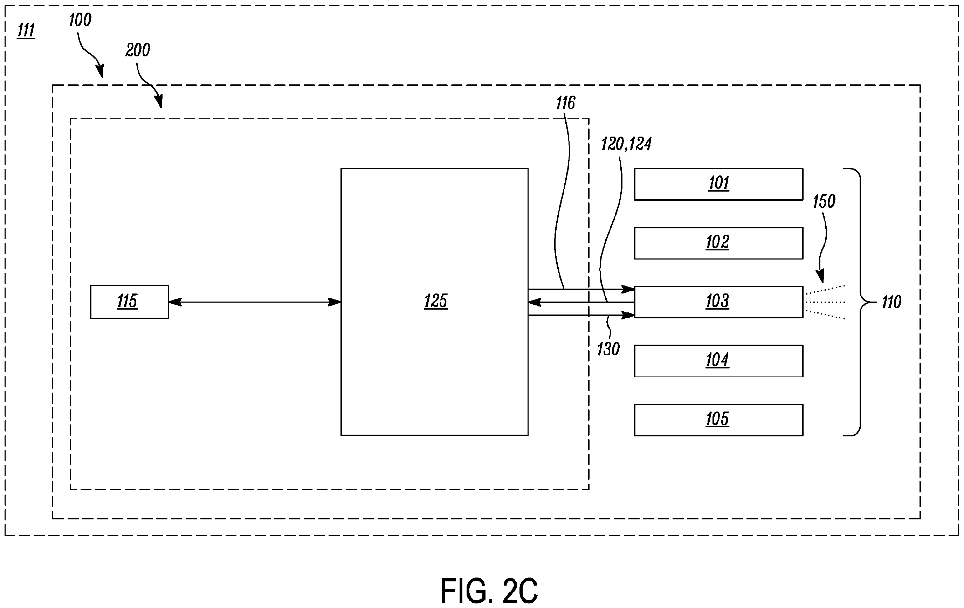

Figs. 2A, 2B and 2C show schematic block diagrams of the medical system 100, according to an embodiment. Specifically, Figs. 2A, 2B and 2C represent exemplary steps for controlling the plurality of medical devices 110 disposed in the environment 111.

Referring to Figs. 2A-2C, the voice input unit 115 is configured to receive a voice input 112. Specifically, the voice input unit 115 is configured to receive the voice input 112 provided by the user. In an example, the voice input 112 may comprise commands such as "take CT scan", "capture x-ray of chest", "record operation", "switch display", "increase contrast", "decrease volume", "change color of light", "check blood pressure", "lower bed height", "print x-ray", and so forth.

The processor 125 may be configured to receive one or more electric/data signals corresponding to the voice input 112 from the voice input unit 115. In some embodiments, the processor 125 is configured to process the voice input 112. In some cases, the processor 125 may process the one or more electric/data signals received from the voice input unit 115. In some embodiments, the processor 125 may perform natural language processing on the voice input 112. In some embodiments, the processor 125 may extract one or more keywords based on the voice input 112. In some embodiments, the one or more keywords may be matched with at least one of domain knowledge and available standard ontologies. For example, the one or more keywords may be matched from Systematized Nomenclature of Medicine - Clinical Terms (SNOMED CT), which is a computer-processable collection of medical terms providing codes, terms, synonyms, and definitions used in clinical documentation and reporting (e.g., radiology reports).

In some embodiments, the processor 125 is configured to generate a query signal 116 corresponding to the voice input 112. In some embodiments, the query signal 116 may be generated based on one or more of the synonyms and the definitions of the one or more keywords extracted from the voice input 112.

The processor 125 is configured to transmit the query signal 116 corresponding to the voice input 112 to at least one medical device from the plurality of medical devices 110. The processor 125 is further configured to receive a response signal 120 from the at least one medical device in response to the query signal 116.

The response signal 120 comprises a negative response 122 if the at least one medical device is incapable of performing a predetermined action 150 (shown in Fig. 2C) in response to the voice input 112, or a positive response 124 (shown in Fig. 2C) if the at least one medical device is capable of performing the predetermined action 150 in response to the voice input 112.

In some cases, a medical device may be incapable of performing the predetermined action 150 due to various reasons. In some cases, a medical device may be incapable of performing the predetermined action 150 if the medical device is not configured or designed to perform the predetermined action 150. For example, an x-ray imaging device may be incapable of performing a CT scan. In some cases, the medical device may be incapable of performing the predetermined action 150 due to a non-functional state/condition of the medical device. In an example, the non-functional state/condition of the medical device may comprise an off state, a disabled state, a low battery power state, a maintenance state, or a faulty state. In some cases, the medical device may be obstructed from performing the predetermined action 150. For example, if the medical device is a mobile robotic device, an obstruction in its path may prevent the robotic mobile device from maneuvering in the environment 111 for performing the predetermined action 150. Therefore, the obstruction may correspond to the non-function state/condition of the medical device. In some cases, the processor 125 may not have any prior information of the non-functional state/condition of the medical device. A medical device may be capable of performing the predetermined action 150 if the medical device is configured to perform the predetermined action 150 and is in a functional state/condition.

The processor 125 is further configured to transmit a command signal 130 (shown in Fig. 2C) to the at least one medical device upon receiving the response signal 120 comprising the positive response 124 from the at least one medical device. The at least one medical device is configured to perform the predetermined action 150 upon receiving the command signal 130.

In some examples, the predetermined action 150 may comprise capturing the medical image using appropriate imaging techniques, such as x-ray imaging, CT scan, and MRI, capturing and/or recording the information during the medical procedure in the environment 111, displaying the information to guide/navigate the user through the medical procedure, switching views of the display, adjusting color/contrast of the display, switching between a two-dimensional (2D) display and a three-dimensional (3D) display, adjusting brightness of the light source, adjusting an irradiation direction of the light source, adjusting a field of view of the camera, adjusting a magnification of the camera, adjusting a focal length of the camera, printing the reports, measuring the heart rate, transporting one or more articles to a desired location, and so forth.

In some embodiments, the processor 125 is configured to, upon receiving the response signal 120 comprising the negative response 122 from the at least one medical device, timely sequentially transmit the query signal 116 to remaining medical devices from the plurality of medical devices 110 if the response signal 120 from a previous medical device from the remaining devices comprises the negative response 122. In other words, the processor 125 is configured to transmit the query signal 116 to a current medical device from the remaining medical devices if the response signal 120 from the previous medical device comprises the negative response 122.

In some embodiments, the processor 125 is configured to timely sequentially transmit the query signal 116 to the remaining medical devices from the plurality of medical devices 110 in a predetermined sequence if the response signal 120 from the previous medical device from the remaining devices comprises the negative response 122.

In some cases, the processor 125 may be configured to transmit the query signal 116 to the current medical device from the remaining medical devices with a predetermined delay from a time of receiving the response signal 120 from the previous medical device comprising the negative response 122. In some cases, the processor 125 may be configured to immediately transmit the query signal 116 to the current medical device from the remaining medical devices upon receiving the response signal 120 from the previous medical device comprising the negative response 122.

The processor 125 is further configured to transmit the command signal 130 to one of the remaining medical devices if the response signal 120 from the one of the remaining medical devices comprises the positive response 124. The one of the remaining medical devices is configured to perform the predetermined action 150 upon receiving the command signal 130.

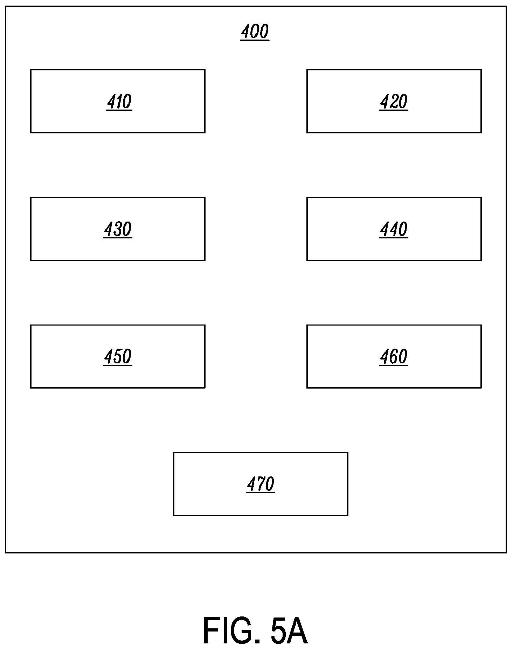

For example, according to the illustrated embodiment of Figs. 2A-2C, the processor 125 is configured to transmit the query signal 116 corresponding to the voice input 112 to the medical device 101 from the plurality of medical devices 110. In some other embodiments, the processor 125 may transmit the query signal 116 corresponding to the voice input 112 to any other medical device from the plurality of medical devices 110. In some embodiments, the processor 125 may randomly select any one medical device from the plurality of medical devices 110. In some embodiments, the medical device 101 may be a master medical device. In some embodiments, the processor 125 may select the medical device 101 based on at least one parameter 400 (shown in Fig. 5A).

The processor 125 is configured to receive the response signal 120 from the medical device 101 in response to the query signal 116. The processor 125 is configured to transmit the command signal 130 to the medical device 101 upon receiving the response signal 120 comprising the positive response 124 from the medical device 101. However, in the illustrated embodiment of Fig. 2A, the response signal 120 from the medical device 101 comprises the negative response 122. In other words, the medical device 101 is incapable of performing the predetermined action 150 in response to the voice input 112.

The processor 125 is configured to, upon receiving the response signal 120 comprising the negative response 122 from the medical device 101, timely sequentially transmit the query signal 116 to remaining medical devices 102, 103, 104, 105 from the plurality of medical devices 110 if the response signal 120 from a previous medical device from the remaining devices 102, 103, 104, 105 comprises the negative response 122. In other words, the processor 125 is configured to, upon receiving the response signal 120 comprising the negative response 122 from the medical device 101, transmit the query signal 116 one by one to the remaining medical devices 102, 103, 104, 105 from the plurality of medical devices 110 if the response signal 120 from the previous medical device from the remaining devices 102, 103, 104, 105 comprises the negative response 122. Therefore, only one of the remaining medical devices 102, 103, 104, 105 receives the query signal 116 at a given time. The query signal 116 may be timely sequentially transmitted to the remaining medical devices 102, 103, 104, 105 in any suitable sequence.

As shown in Fig. 2B, the processor 125, upon receiving the response signal 120 comprising the negative response 122 from the medical device 101, transmits the query signal 116 to the medical device 102. In other words, the processor 125, upon receiving the response signal 120 comprising the negative response 122 from the medical device 101, transmits the query signal 116 to the remaining medical device 102. The processor 125 receives the response signal 120 from the medical device 102 in response to the query signal 116. The processor 125 is configured to transmit the command signal 130 to the medical device 102 upon receiving the response signal 120 comprising the positive response 124 from the medical device 102. However, in the illustrated embodiment of Fig. 2B, the response signal 120 from the medical device 102 comprises the negative response 122.

The processor 125, upon receiving the response signal 120 comprising the negative response 122 from the medical device 102, transmits the query signal 116 to the medical device 103. In other words, the processor 125, upon receiving the response signal 120 comprising the negative response 122 from the previous medical device 102, transmits the query signal 116 to the remaining medical device 103. In this case, the processor 125 is configured to transmit the query signal 116 to the current medical device 103 from the remaining medical devices 102, 103, 104, if the response signal 120 from the previous medical device 102 comprises the negative response 122. The processor 125 receives the response signal 120 from the medical device 103 in response to the query signal 116. In the illustrated embodiment in Fig. 2C, the response signal 120 from the medical device 103 comprises the positive response 124.

In some other cases, the processor 125 may transmit the query signal 116 timely sequentially to the remaining medical devices 104, 105 from the plurality of medical devices 110 if the response signal 120 from the previous medical device 103, 104 comprises the negative response 122. Since, the response signal 120 from the medical device 103 comprises the positive response 124, the processor 125 may not further transmit the query signal 116 to the remaining medical devices 104, 105.

The processor 125 is configured to transmit the command signal 130 to the medical device 103. In other words, the processor 125 is configured to transmit the command signal 130 to one of the remaining medical devices 103 if the response signal 120 from the one of the remaining medical devices 103 comprises the positive response 124. The medical device 103 is configured to perform the predetermined action 150 upon receiving the command signal 130. In other words, the one of the remaining medical devices 103 is configured to perform the predetermined action 150 upon receiving the command signal 130.

In some cases, the response signal 120 from each of the remaining medical devices 102, 103, 104, 105 comprises the negative response 122. In such cases, the processor 125 may be configured to provide an alert to the user. In some embodiments, the medical system 100 may comprise an output device (not shown) for providing the alert. In some embodiments, the alert may be provided to the user via an external device (not shown) configured to communicate with the processor 125. In some embodiments, the external device may be a hand-held portable device, such as a mobile phone, a tablet computer, a smart phone, etc. In some embodiments, the alert may be an audible alert, a visual alert, a haptic alert, or a combination thereof.

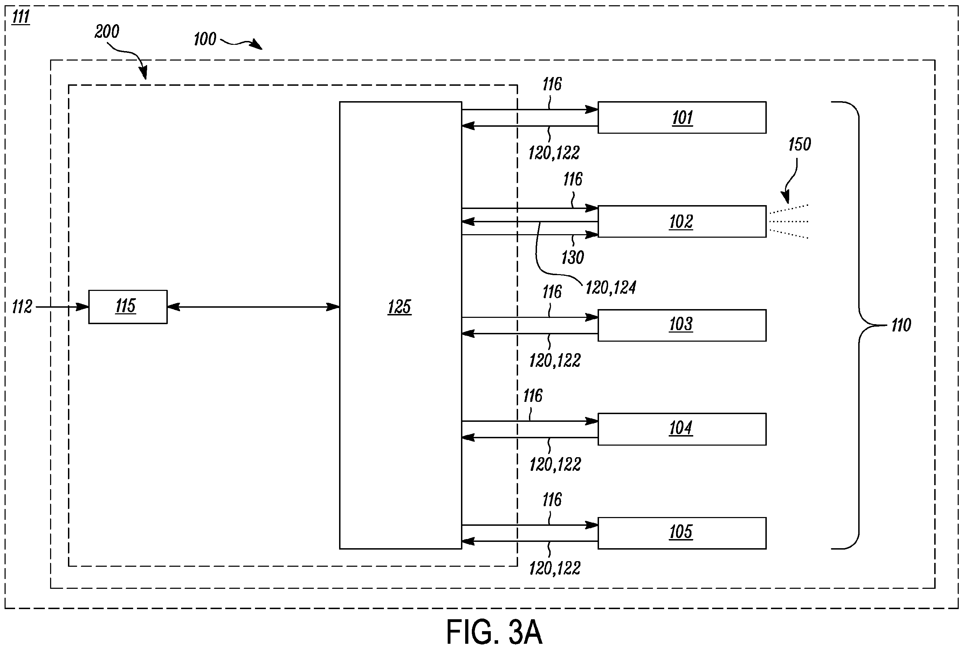

Fig. 3A shows a schematic block diagram of the medical system 100, according to another embodiment. The medical system 100 illustrated in Fig. 3A is configured to operate in a different manner. Specifically, the medical system 100 illustrated in Fig. 3A may be configured to query the plurality of medical devices 110 in a different manner.

As discussed above, the voice input unit 115 is configured to receive the voice input 112. The processor 125 may be configured to receive the one or more electric/data signals corresponding to the voice input 112 from the voice input unit 115. In the illustrated embodiment of Fig. 3A, the at least one medical device comprises each of the plurality of medical devices 110. The processor 125 is configured to timely parallelly transmit the query signal 116 corresponding to the voice input 112 to each of the plurality of medical devices 110. Specifically, the processor 125 is configured to timely parallelly transmit the query signal 116 to the medical devices 101, 102, 103, 104, 105. In other words, the processor 125 transmits the query signal 116 simultaneously to each of the plurality of medical devices 110. The processor 125 is further configured to receive the response signal 120 from each of the plurality of medical devices 110 in response to the query signal 116.

The response signal 120 comprises the negative response 122 if a corresponding medical device from the plurality of medical devices 110 is incapable of performing the predetermined action 150 in response to the voice input 112, or the positive response 124 if the corresponding medical device is capable of performing the predetermined action 150 in response to the voice input 112.

In some embodiments, the processor 125 receives the response signal 120 comprising the positive response 124 from one medical device from the plurality of medical devices 110. In these embodiments, the processor 125 is configured to transmit the command signal 130 to the one medical device from the plurality of medical devices 110. The one medical device from the plurality of medical devices 110 is configured to perform the predetermined action 150 upon receiving the command signal 130.

For example, as illustrated in Fig. 3A, the processor 125 receives the response signal 120 from each of the plurality of medical devices 110. The processor 125 receives the response signal 120 comprising the positive response 124 only from the medical device 102 from the plurality of medical devices 110. In other words, the processor 125 receives the response signal 120 comprising the negative response 122 from the medical devices 101, 103, 104, 105 from the plurality of medical devices 110. In such embodiments, the processor 125 transmits the command signal 130 to the medical device 102. The medical device 102 is configured to perform the predetermined action 150 upon receiving the command signal 130.

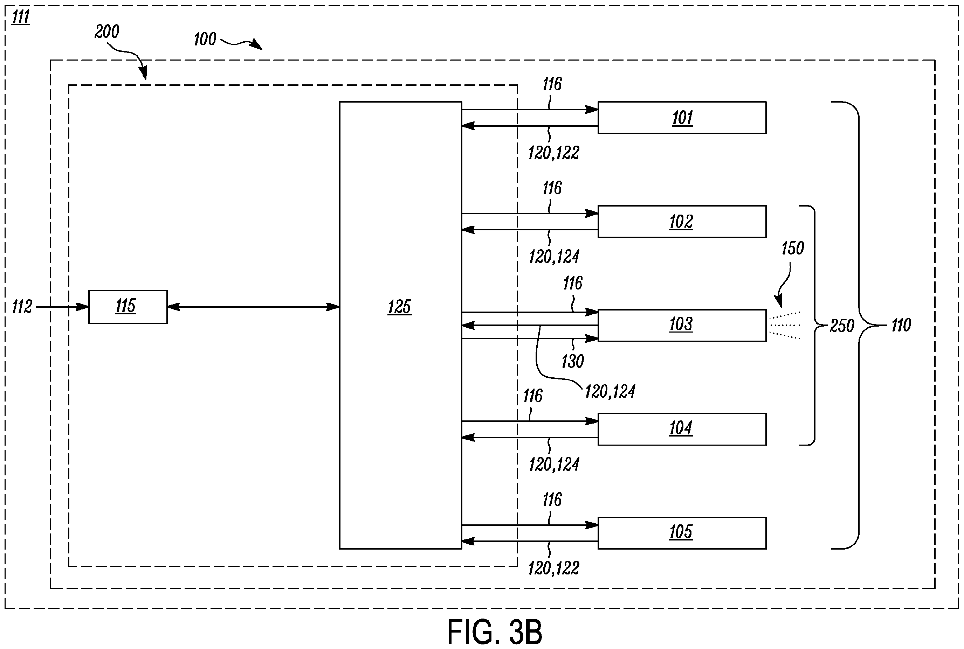

Fig. 3B shows a schematic block diagram of the medical system 100, according to another embodiment. In the illustrated embodiment of Fig. 3B, the processor 125 is configured to timely parallelly transmit the query signal 116 corresponding to the voice input 112 to each of the plurality of medical devices 110. In other words, the processor 125 is configured to timely parallelly transmit the query signal 116 to the medical devices 101, 102, 103, 104, 105. The processor 125 is further configured to receive the response signal 120 from each of the plurality of medical devices 110.

In some embodiments, the processor 125 is configured to receive the response signal 120 comprising the positive response 124 from each of a set of medical devices 250 from the plurality of medical devices 110. The set of medical devices 250 may correspond to a subset of the plurality of medical devices 110. Therefore, multiple medical devices from the plurality of medical devices 110 may positively respond to the query signal 116. In the illustrated embodiment of Fig. 3B, the set of medical devices 250 comprises the medical devices 102, 103, 104. In other words, the processor 125 receives the response signal 120 comprising the positive response 124 from each of the medical devices 102, 103, 104 from the plurality of medical devices 110. In some embodiments, the processor 125 is configured to select one medical device from the set of medical devices 250 based on the at least one parameter 400 (shown in Fig. 5A). In other words, the processor 125 is configured to select the one medical device from the medical devices 102, 103, 104 based on the at least one parameter 400. In some other embodiments, the processor 125 may be configured to randomly select the one medical device from the set of medical devices 250.

The processor 125 is further configured to transmit the command signal 130 to the one medical device from the set of medical devices 250. In the illustrated embodiment of Fig. 3B, the processor 125 selects the medical device 103 from the set of medical devices 250 based on the at least one parameter 400 (shown in Fig. 5A). Therefore, the processor 125 transmits the command signal 130 to the medical device 103 from the set of medical devices 250. The medical device 103 is configured to perform the predetermined action 150 upon receiving the command signal 130.

In some cases, the response signal 120 from each of the medical devices 101, 102, 103, 104, 105 comprises the negative response 122. In such cases, the processor 125 may be configured to provide the alert to the user.

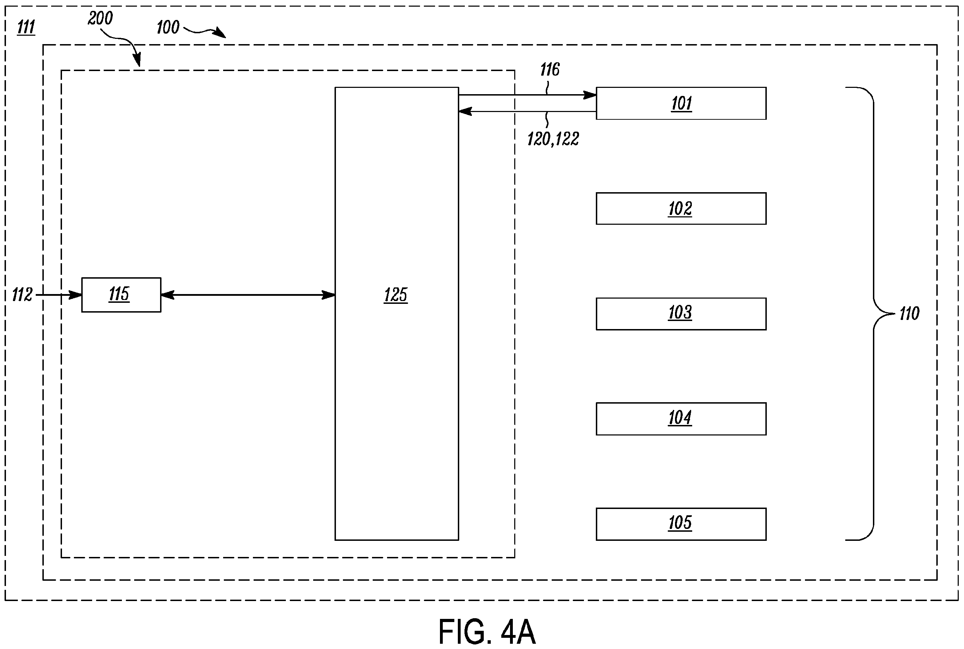

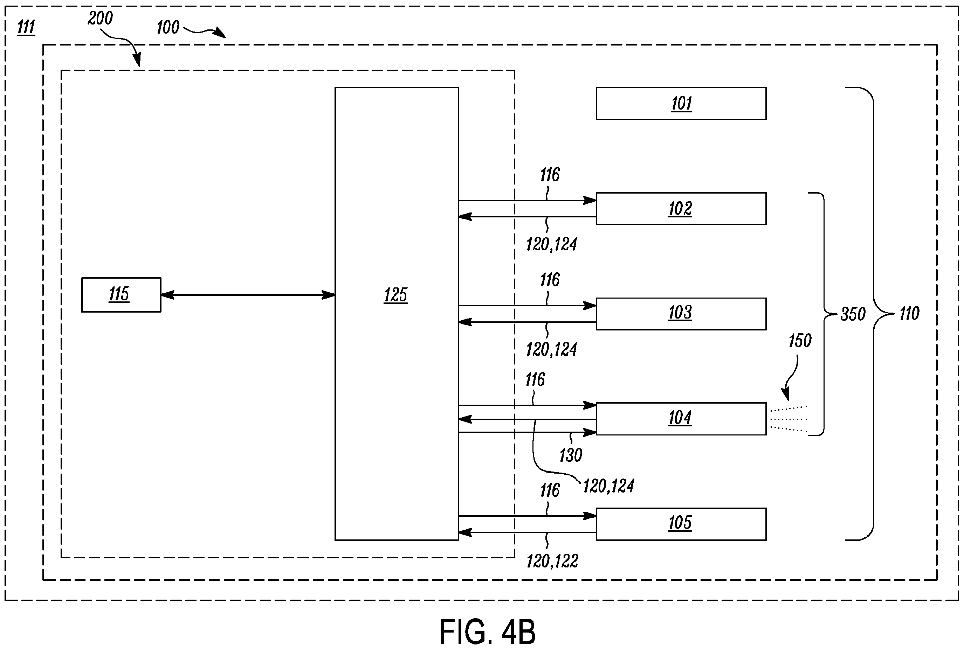

Figs. 4A and 4B show schematic block diagrams of the medical system 100, according to another embodiment. Specifically, Figs. 4A and 4B represent exemplary steps for controlling the plurality of medical devices 110. The medical system 100 illustrated in Figs. 4A and 4B is configured to operate in a different manner. Specifically, the medical system 100 illustrated in Figs. 4A and 4B may be configured to query the plurality of medical devices 110 in a different manner.

As discussed above, the voice input unit 115 is configured to receive the voice input 112. The processor 125 may be configured to receive the one or more electric/data signals corresponding to the voice input 112 from the voice input unit 115. The processor 125 is configured to transmit the query signal 116 corresponding to the voice input 112 to the at least one medical device from the plurality of medical devices 110. The processor 125 is further configured to receive the response signal 120 from the at least one medical device in response to the query signal 116.

In the illustrated embodiment of Figs. 4A and 4B, the processor 125 is further configured to transmit the query signal 116 to at least one remaining medical device from the plurality of medical devices 110 upon receiving the response signal 120 comprising the negative response 122 from the at least one medical device. The processor 125 is further configured to receive the response signal 120 from the at least one remaining medical device in response to the query signal 116. The response signal 120 comprises the negative response 122 if the at least one medical device is incapable of performing the predetermined action 150 in response to the voice input 112, or the positive response 124 if the at least one medical device is capable of performing the predetermined action 150 in response to the voice input 112. The processor 125 is further configured to transmit the command signal 130 to the at least one remaining medical device upon receiving the response signal 120 comprising the positive response 124 from the at least one remaining medical device.

For example, in the illustrated embodiment of Figs. 4A and 4B, the at least one remaining medical device comprises the medical devices 102, 103, 104, 105. In some other embodiments, the at least one remaining medical device may comprise any number of remaining medical devices. The processor 125 is configured to transmit the query signal 116 to the remaining medical devices 102, 103, 104, 105 from the plurality of medical devices 110 upon receiving the response signal 120 comprising the negative response 122 from the medical device 101. In some embodiments, the processor 125 may be configured to timely parallelly transmit the query signal 116 to the remaining medical devices 102, 103, 104, 105 from the plurality of medical devices 110 upon receiving the response signal 120 comprising the negative response 122 from the medical device 101. The processor 125 is further configured to transmit the command signal 130 to one of the remaining medical devices 102, 103, 104, 105 upon receiving the response signal 120 comprising the positive response 124 from the one of the remaining medical devices 102, 103, 104, 105.

In some embodiments, the processor 125 is configured to receive the response signal 120 comprising the positive response 124 from each of a set of medical devices 350 from the remaining medical devices 102, 103, 104, 105. In the illustrated embodiment of Fig. 4B, the set of medical devices 350 comprises the medical devices 102, 103, 104. In other words, the processor 125 receives the response signal 120 comprising the positive response 124 from the medical devices 102, 103, 104 from the remaining medical devices 102, 103, 104, 105. In these embodiments, the processor 125 is configured to select one medical device from the set of medical devices 350 based on the at least one parameter 400 (shown in Fig. 5A). In other words, the processor 125 is configured to select one medical device from the medical devices 102, 103, 104 based on the at least one parameter 400. In some other embodiments, the processor 125 is configured to randomly select the one medical device from the set of medical devices 350.

The processor 125 is further configured to transmit the command signal 130 to the one medical device from the set of medical devices 350. In the illustrated embodiment of Fig. 4B, the processor 125 selects the medical device 104 from the set of medical devices 350 based on the at least one parameter 400 (shown in Fig. 5A). Therefore, the processor 125 transmits the command signal 130 to the medical device 104 from the set of medical devices 350. The medical device 104 is configured to perform the predetermined action 150 upon receiving the command signal 130.

In some cases, the response signal 120 from each of the remaining medical devices 102, 103, 104, 105 comprises the negative response 122. In such cases, the processor 125 may be configured to provide the alert to the user.

Fig. 5A shows a schematic block diagram of the at least one parameter 400, according to an embodiment.

Referring to Figs. 1 and 5A, in some embodiments, the at least one parameter 400 comprises a user input 410, a prior history of selection 420, a predetermined hierarchy 430 of the plurality of medical devices 110, a time of installation 440 of each of the plurality of medical devices 110, a type of connection 450 between the processor 125 and each of the plurality of medical devices 110, a proximity 460 of each of the plurality of medical devices 110 to the voice input unit 115, and/or a proximity 470 of each of plurality of medical devices 110 to a desired location for performing the predetermined action 150 (shown in Fig. 2C).

Referring to Figs. 2B, 3B and 5A, therefore, the at least one parameter 400 may further comprise the prior history of selection 420 of the set of medical devices 250, 350, the predetermined hierarchy 430 of the set of medical devices 250, 350, the time of installation 440 of each of the set of medical devices 250, 350, the type of connection 450 between the processor 125 and each of the set of medical devices 250, 350, the proximity 460 of each of the set of medical devices 250, 350 to the voice input unit 115, and/or the proximity 470 of each of the set of medical devices 250, 350 to the desired location for performing the predetermined action 150.

In some embodiments, the user input 410 may be provided by the user via a user interface (not shown). The user interface may be any user interface that enables the user to provide the user input 410. For example, the user interface may comprise one or more switches, one or more buttons/touch-sensitive elements, a keypad, a keyboard, a touch screen or an application, a display screen, a graphical user interface (GUI) or any other visual rendering component. In some embodiments, the external device may comprise the user interface. In some embodiments, the medical system 100 (shown in Fig. 1) may comprise the user interface. In some embodiments, the user interface may be configured to communicate with the processor 125 (shown in Fig. 1) via a wired and/or a wireless connection.

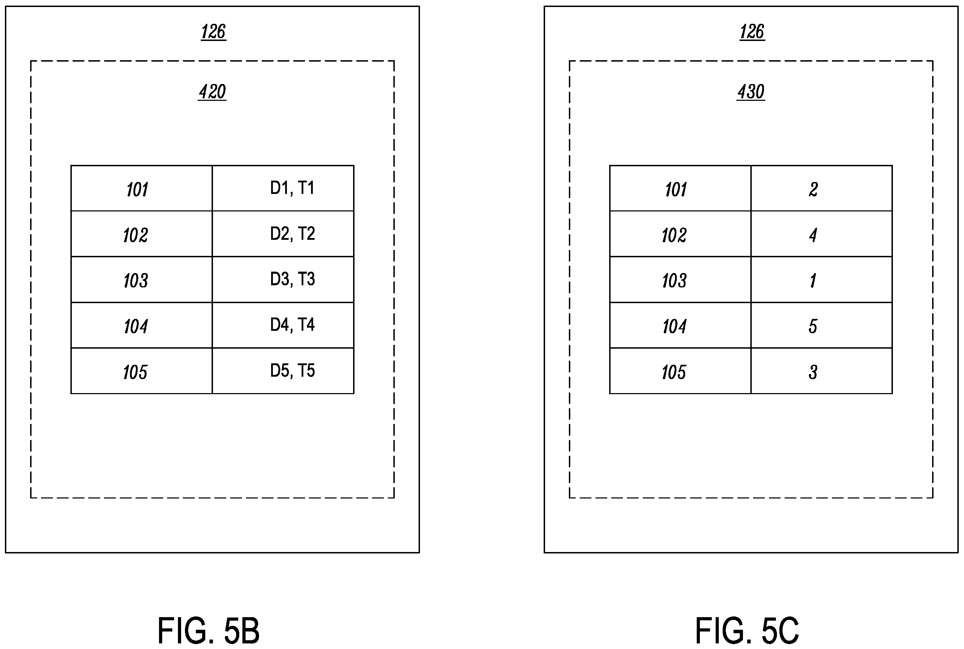

Fig. 5B shows a schematic block diagram of a memory 126 comprising the prior history of selection 420, according to an embodiment. In some embodiments, the memory 126 may be configured to communicate with the processor 125 (shown in Figs. 1-4B). In some embodiments, the system 100 shown in Figs. 2A and 3A, respectively, may comprise the memory 126. In some embodiments, the medical system 100 shown in Fig. 1 may comprise the memory 126. In some other embodiments, the memory 126 may be remote from the medical system 100 shown in Figs. 1 to 4B. In some other embodiments, the external device may comprise the memory 126.

The memory 126 may be used to store information, data, signals, and measurements acquired or made by the plurality of medical devices 110 and/or the processor 125 (shown in Fig. 1). In some embodiments, the memory 126 may be configured to communicate with the processor 125 via a wired and/or a wireless connection.

In some embodiments, the prior history of selection 420 is stored as a lookup table or a database in the memory 126. In the illustrated embodiment of Fig. 5B, the lookup table comprising the prior history of selection 420 may comprise a date and a time of a last selection of each of the plurality of medical devices 110 (shown in Fig. 1). For example, the medical device 101 was last selected on a date D1 at a time T1. The prior history of selection 420 of the plurality of medical devices 110 may indicate that a corresponding medical device is updated and was working well when last selected. Thus, a medical device having a more recent date and/or time of selection may be selected from the set of medical devices 250 (shown in Fig. 3B) or the set of medical devices 350 (shown in Fig. 4B).

Fig. 5C shows a schematic block diagram of the memory 126 comprising the predetermined hierarchy 430 of the plurality of medical devices 110 (shown in Fig. 1), according to an embodiment.

In some embodiments, the predetermined hierarchy 430 is stored as a lookup table or a database in the memory 126. In the illustrated embodiment of Fig. 5C, the lookup table comprising the predetermined hierarchy 430 may comprise a hierarchy of the plurality of medical devices 110 (shown in Fig. 1). In some embodiments, the hierarchy may be determined by the user. In some other embodiments, the hierarchy may be automatically determined (for example, by the processor 125 shown in Fig. 1). In some embodiments, the hierarchy may be determined using a predictive model (e.g., a machine learning model). In some embodiments, the hierarchy may be based on a policy or a protocol of the environment 111 (e.g., the operation room). In some embodiments, the processor 125 may be configured to adjust the hierarchy based on a feedback from the user. In some embodiments, the hierarchy may be based on a preference of the user. In some embodiments, the hierarchy may be based on a robustness of the plurality of medical devices 110. In some embodiments, the hierarchy may be based on a frequency of use of the plurality of medical devices 110. A medical device having a highest hierarchy may be selected from the set of medical devices 250 (shown in Fig. 3B) or the set of medical devices 350 (shown in Fig. 4B). For example, the medical device 103 may be selected from the set of medical devices 250 comprising the medical devices 101, 102, 103 based on the predetermined hierarchy 430.

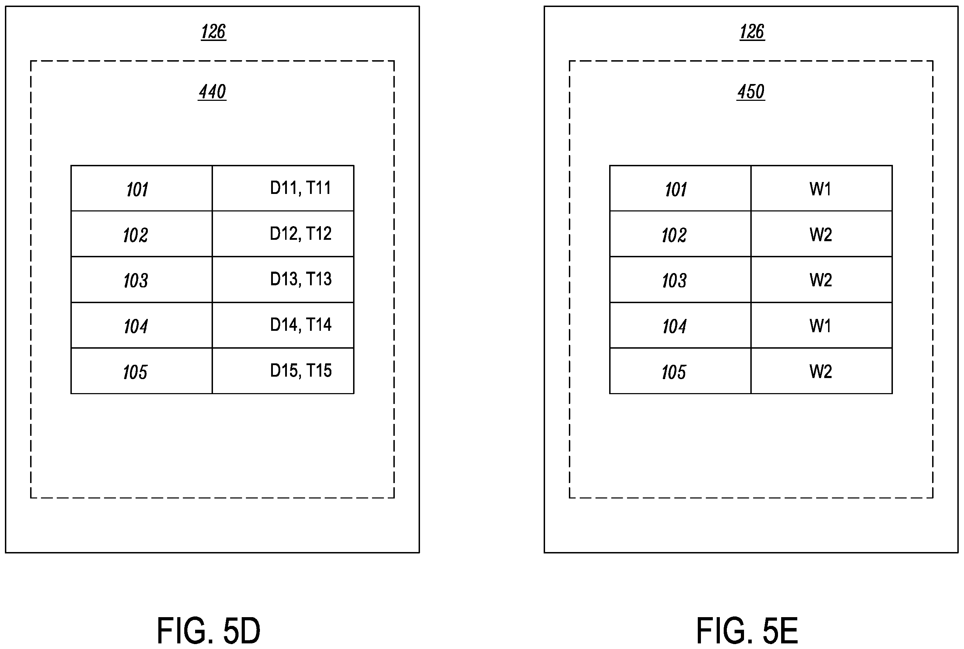

Fig. 5D shows a schematic block diagram of the memory 126 comprising the time of installation 440 of the plurality of medical devices 110 (shown in Fig. 1), according to an embodiment. In some embodiments, the time of installation 440 is stored as a lookup table or a database in the memory 126. In the illustrated embodiment of Fig. 5E, the lookup table comprising the time of installation 440 may comprise a date and a time indicative of the time of installation 440 of each of the plurality of medical devices 110. For example, the medical device 101 was installed on a date D11 at a time T11. The time of installation 440 of the plurality of medical devices 110 may indicate if a corresponding medical device is a newer medical device. The newer medical device may have additional features than an older medical device. Further, the newer medical device may be in a better operation state than the older medical device. Thus, a newest medical device may be selected from the set of medical devices 250 (shown in Fig. 3B) or the set of medical devices 350 (shown in Fig. 4B).

Fig. 5E shows a schematic block diagram of the memory 126 comprising the type of connection 450 between the processor 125 and each of the plurality of medical devices 110 (shown in Fig. 1), according to an embodiment. In some embodiments, the type of connection 450 is stored as a lookup table or a database in the memory 126. In the illustrated embodiment of Fig. 5E, the lookup table comprising the type of connection 450 may comprise a data indicative of a wired connection or a wireless connection between the processor 125 and each of the plurality of medical devices 110. In Fig. 5E, W1 denotes a wired connection and W2 denotes a wireless connection. For example, the medical device 101 is connected to the processor 125 via a wired connection. The type of connection 450 may indicate a reliability of a connection between the processor 125 (shown in Fig. 1) and each of the plurality of medical devices 110. For example, the wired connection may be more reliable than the wireless connection. Thus, a medical device having the wired connection with the processor 125 may be selected from the set of medical devices 250 (shown in Fig. 3B) or the set of medical devices 350 (shown in Fig. 4B).

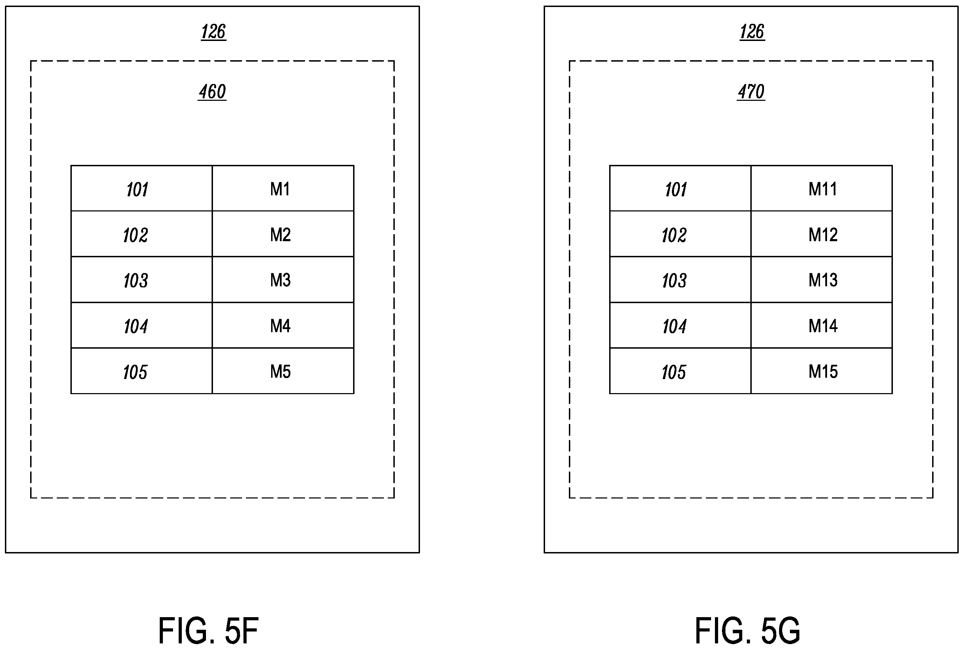

Fig. 5F shows a schematic block diagram of the memory 126 comprising the proximity 460 of each of the plurality of medical devices 110 (shown in Fig. 1) to the voice input unit 115 (shown in Fig. 1), according to an embodiment. In some embodiments, the proximity 460 of each of the plurality of medical devices 110 to the voice input unit 115 is stored as a lookup table or a database in the memory 126. In the illustrated embodiment of Fig. 5F, the lookup table comprising the proximity 460 of each of the plurality of medical devices 110 to the voice input unit 115 may comprise a distance between each of the plurality of medical devices 110 and the voice input unit 115. For example, the medical device 101 is located at a distance M1 from the processor 125. In some embodiments, a medical device closest to the voice input unit 115 may be selected from the set of medical devices 250 (shown in Fig. 3B) or the set of remaining medical devices 250 (shown in Fig. 4B).

Fig. 5G shows a schematic block diagram of the memory 126 comprising the proximity 470 of each of the plurality of medical devices 110 (shown in Fig. 1) to the desired location for performing the predetermined action 150 (shown in Fig. 2C, 3A, 3B, 4b), according to an embodiment. In some embodiments, the proximity 470 of each of the plurality of medical devices 110 to the desired location for performing the predetermined action 150 is stored as a lookup table or a database in the memory 126. In the illustrated embodiment of Fig. 5G, the lookup table comprising the proximity 470 of each of the plurality of medical devices 110 to the desired location may comprise a distance between each of the plurality of medical devices 110 and the desired location. For example, the medical device 101 is located at a distance M11 from the desired location. In some embodiments, a medical device most proximate to the desired location may be selected from the set of medical devices 250 (shown in Fig. 3B) or the set of medical devices 350 (shown in Fig. 4B).

In some embodiments, the proximity 470 of each of the plurality of medical devices 110 to the desired location for performing the predetermined action 150 may be calculated by the processor 125 based on the voice input 112 and then stored in the memory 126. In some embodiments, a list of possible locations may be already stored in the memory 126. In an example, the list of possible locations may include a list of operating rooms, a list of patient rooms, a list of nurse stations, and so forth. Further, a location data including a distance between each of the plurality of medical devices 110 and a corresponding possible location may be stored in the memory 126. The processor 125 may determine the desired location for performing the predetermined action 150 from the list of possible locations based on the voice input 112. Further, the processor 125 may retrieve relevant location data from the memory 126.

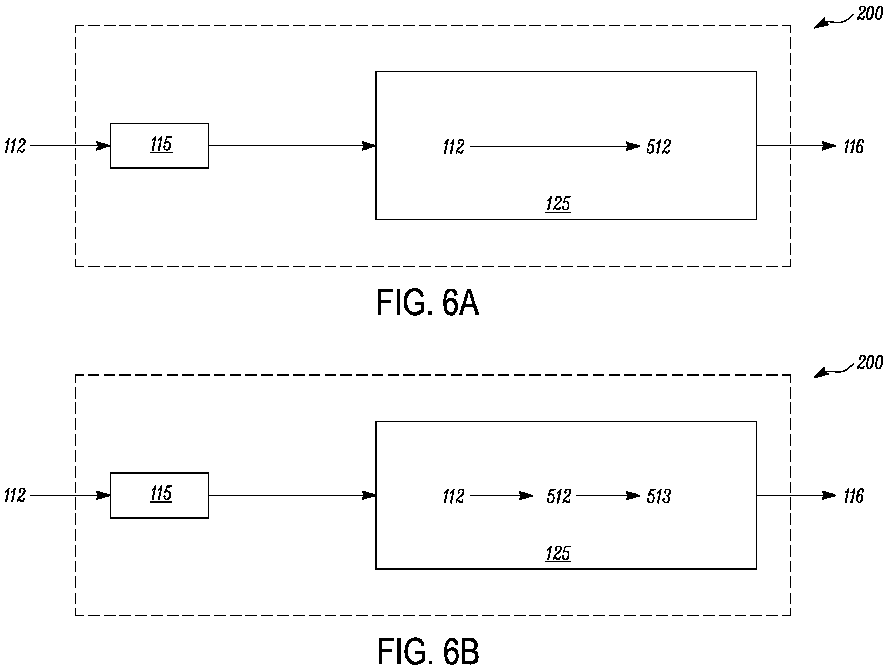

Fig. 6A shows a schematic block diagram of the control device 200, according to another embodiment.

In the illustrated embodiment of Fig. 6A, the processor 125 is further configured to generate a transcription 512 based on the voice input 112. In this embodiment, the processor 125 is further configured to generate the query signal 116 based on the transcription 512.

In some embodiments, the transcription 512 generated based on the query signal 116 may comprise one or more keywords. In some embodiments, the one or more keywords may be matched from at least one of domain knowledge and available standard ontologies to generate the query signal 116. Specifically, the available standard ontologies may be used for restructuring the transcription 512 to generate an appropriate query signal 116 for the plurality of medical devices 110 in the environment 111, such as an operating room.

Fig. 6B shows a schematic block diagram of the control device 200, according to another embodiment. Fig. 6B is substantially similar to Fig. 6A. However, in the illustrated embodiment of Fig. 6B, the processor 125 is further configured to generate a synthesized speech signal 513 based on the transcription 512. In such embodiments, the query signal 116 comprises the synthesized speech signal 513. In some embodiments, the synthesized speech signal 513 may be an audible signal. The synthesized speech signal 513 may be generated based on various methods, for example, but not limited to, concatenative synthesis, formant synthesis, articulatory synthesis, hidden Markov model (HMM) based synthesis, and so forth.

In some embodiments, the processor 125 may transmit the query signal 116 comprising the synthesized speech signal 513 to a public address (PA) system such that each of the plurality of medical devices 110 can respond to the query signal 116.

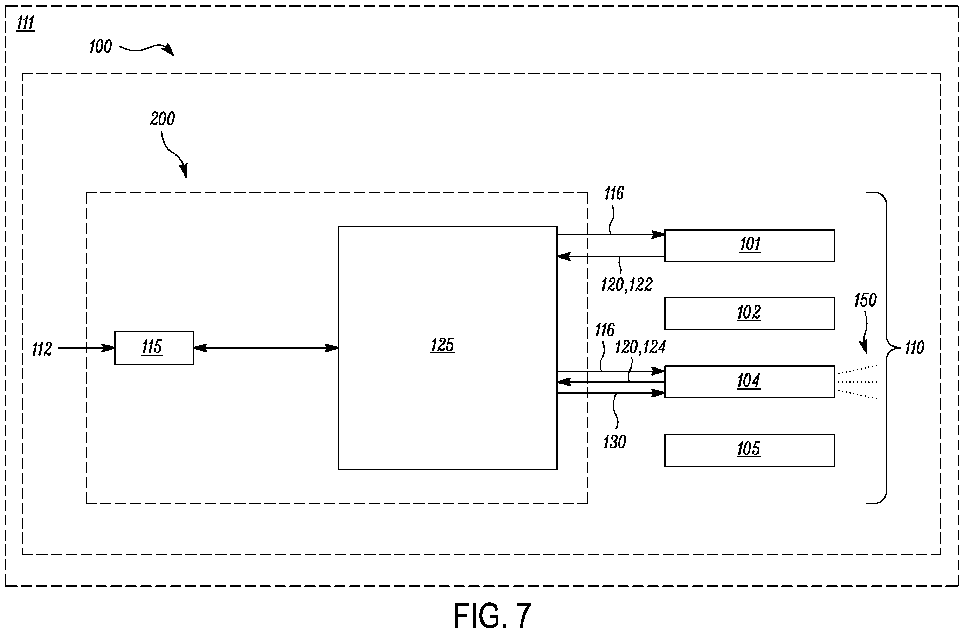

Fig. 7 shows a schematic block diagram of the medical system 100, according to another embodiment. In some embodiments, one of the plurality of medical devices 110 (i.e., one of the medical devices 101, 102, 103, 104, 105) is the control device 200. In some embodiments, the control device 200 is acts like a master medical device.

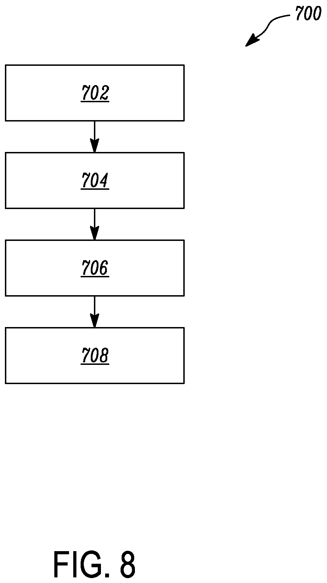

Fig. 8 shows a flowchart depicting a computer-implemented method 700 of controlling the plurality of medical devices 110. In some embodiments, the processor 125 (shown in Fig. 1) may comprise one or more of software and/or hardware modules that are each configured to perform, or are for performing, individual or multiple steps of the computer-implemented method 700 described herein. In some embodiments, the memory 126 (shown in Figs. 5B-5G) may be configured to store program code that can be executed by the processor 125 to perform the various steps described herein. The computer-implemented method 700 will be described with reference to Figs. 1-8.

The computer-implemented method 700 comprises, at step 702, receiving the voice input 112.

The computer-implemented method 700 comprises, at step 704, transmitting the query signal 116 corresponding to the voice input 112 to the at least one medical device from the plurality of medical devices 110.

The computer-implemented method 700 comprises, at step 706, receiving the response signal 120 from the at least one medical device in response to the query signal 116

The computer-implemented method 700 comprises, at step 708, transmitting the command signal 130 to the at least one medical device upon receiving the response signal 120 comprising the positive response 124 from the at least one medical device. The at least one medical device is configured to perform the predetermined action 150 upon receiving the command signal 130.

In the illustrated embodiment of Figs. 2A-2C, the at least one medical device is the medical device 101. In some embodiments, the computer-implemented method 700 further comprises, upon receiving the response signal 120 comprising the negative response 122 from the medical device 101, timely sequentially transmitting the query signal 116 to the remaining medical devices 102, 103, 104, 105 from the plurality of medical devices 110 if the response signal 120 from the previous medical device from the remaining devices 102, 103, 104, 105 comprises the negative response 122. The computer-implemented method 700 further comprises transmitting the command signal 130 to one of the remaining medical devices 102, 103, 104, 105 if the response signal 120 from the one of the remaining medical devices 102, 103, 104, 105 comprises the positive response 124. In the illustrated embodiment of Figs. 2A-2C, the response signal 120 from the medical device 103 comprises the positive response 124. Therefore, the command signal 130 is transmitted to the medical device 103.

Referring to Figs. 3A and 3B, in some embodiments, transmitting the query signal 116 corresponding to the voice input 112 to the at least one medical device from the plurality of medical devices 110 further comprises timely parallelly transmitting the query signal 116 corresponding to the voice input 112 to each of the plurality of medical devices 110. In some embodiments, receiving the response signal 120 from the at least one medical device in response to the query signal 116 comprises receiving the response signal 120 from each of the plurality of medical devices 110 in response to the query signal 116. The response signal 120 comprises the negative response 122 if the corresponding medical device from the plurality of medical devices 110 is incapable of performing the predetermined action 150 in response to the voice input 112, or the positive response 124 if the corresponding medical device is capable of performing the predetermined action 150 in response to the voice input 112.

In some embodiments, the computer-implemented method 700 further comprises receiving the response signal 120 comprising the positive response 124 from each of the set of medical devices 250 from the plurality of medical devices 110. In such embodiments, the computer-implemented method 700 further comprises selecting the one medical device from the set of medical devices 250 based the on the at least one parameter 400.

In some embodiments, the at least one parameter 400 comprises at least one of the user input 410, the prior history of selection 420, the predetermined hierarchy 430 of the set of medical devices 250, the time of installation 440 of each of the set of medical devices 250, the type of connection 450 between the processor 125 and each of the set of medical devices 250, the proximity 460 of each of the set of medical devices 250 to the voice input unit 115, and the proximity 470 of each of the set of medical devices 250 to the desired location for performing the predetermined action 150.

Further, the computer-implemented method 700 comprises transmitting the command signal 130 to the one medical device from the set of medical devices 250. For example, as shown in Fig. 3B, the computer-implemented method 700 comprises transmitting the command signal 130 to the medical device 103 from the set of medical devices 250.

Referring to Figs. 4A and 4B, in some embodiments, the computer-implemented method 700 further comprises transmitting the query signal 116 to the at least one remaining medical device from the plurality of medical devices 110 upon receiving the response signal 120 comprising the negative response 122 from the at least one medical device. In the illustrated embodiment of Figs. 4A and 4B, the at least one medical device is the medical device 101. In these embodiments, the computer-implemented method 700 further comprises transmitting the command signal 130 to the at least one remaining medical device upon receiving the response signal 120 comprising the positive response 124 from the at least one remaining medical devices 102, 103, 104, 105. Further, the computer-implemented method 700 comprises receiving the response signal 120 from the at least one remaining medical device in response to the query signal 116. Further, the computer-implemented method 700 comprises transmitting the command signal 130 to the at least one remaining medical device from the set of medical devices 350. For example, as shown in Fig. 4B, the computer-implemented method 700 comprises transmitting the command signal 130 to the medical device 104 from the set of medical devices 350.

The medical system 100 and the computer-implemented method 700 may provide unified control of the plurality of medical devices 110 in the same environment 111. In other words, the medical system 100 and the computer-implemented method 700 may control the plurality of medical devices 110 in the environment 111 through a simple voice-enabled interface. Thus, the medical system 100 may be user-friendly. Since the voice input 112 is not a manual input, such as a hand-operated input, the medical system 100 and the computer-implemented method 700 may be suitable for use in the environment 111, such as the clinical environment. Further, the user may provide the voice input 112 without taking hands off a surgical tool, thereby further improving a convenience to the user.

Furthermore, the user may not have to specify which medical device from the plurality of medical devices 110 should perform the predetermined action 150. In addition, the user may not have to memorize different wake up words (WUW) for different medical devices. Therefore, the medical system 100 and the computer-implemented method 700 would allow the user to have an easy control over the plurality of medical devices 110 in the environment 111.

In addition, the medical system 100 and the computer-implemented method 700 may dynamically select a medical device from the plurality of medical devices 110 upon receiving the voice input 112. This may reduce a likelihood of the predetermined action 150 not being performed in the environment 111. Specifically, the medical system 100 and the computer-implemented method 700 may not select a medical device to perform the predetermined action 150 if the response signal 120 from the medical device, in response to the query signal 116 comprises the negative response 122 indicative of the medical device being incapable of performing the predetermined action 150. The medical system 100 and the computer-implemented method 700 may only select a medical device to perform the predetermined action 150 if the response signal 120 from the medical device, in response to the query signal 116 comprises the positive response 124 indicative of the medical device being capable of performing the predetermined action 150, i.e., the medical device is configured to perform the predetermined action 150 as well as in the functional state/condition. This may reduce the likelihood of the predetermined action 150 not being performed in the environment 111. Therefore, each of the medical system 100 may be a dynamic and a reliable medical system. The computer-implemented method 700 may also be dynamic and adaptive.

The medical system 100 and the computer-implemented method 700 may be able to adapt to any sudden or unexpected changes in various attributes of the plurality of medical devices 110 as the selection of the medical devices is not solely based on any predetermined and/or stored device attributes, but primarily based on active querying. For example, it may not be possible to update the stored device attributes continuously and correctly in dynamically changing professional environments, and hence, there may be a possibility of a desirable action not being performed if the selection of the medical devices is solely based on stored device attributes. However, selection of the medical devices based on active querying may not be susceptible to sudden or unexpected changes in such professional environments.

There is thus provided a medical system and a computer-implemented method for controlling a plurality of medical devices, which overcomes the existing problems.

There is also provided a computer program product comprising a computer readable medium having computer readable code embodied therein, the computer readable code being configured such that, on execution by a suitable computer or processing unit, the computer or processing unit is caused to perform the method or methods described herein.

It will be appreciated that the embodiments of the invention also apply to computer programs, particularly computer programs on or in a carrier, adapted to put the invention into practice. The program may be in the form of a source code, an object code, a code intermediate source and an object code such as in a partially compiled form, or in any other form suitable for use in the implementation of the method according to embodiments of the invention. It will also be appreciated that such a program may have many different architectural designs. For example, a program code implementing the functionality of the method or system according to the invention may be sub-divided into one or more sub- routines. Many different ways of distributing the functionality among these sub-routines will be apparent to the skilled person. The sub-routines may be stored together in one executable file to form a self-contained program. Such an executable file may comprise computer- executable instructions, for example, processor instructions and/or interpreter instructions (e.g., Java interpreter instructions). Alternatively, one or more or all of the sub-routines may be stored in at least one external library file and linked with a main program either statically or dynamically, e.g., at run-time. The main program contains at least one call to at least one of the sub-routines. The sub-routines may also comprise function calls to each other. An embodiment relating to a computer program product comprises computer-executable instructions corresponding to each processing stage of at least one of the methods set forth herein. These instructions may be sub-divided into sub-routines and/or stored in one or more files that may be linked statically or dynamically. Another embodiment relating to a computer program product comprises computer-executable instructions corresponding to each means of at least one of the systems and/or products set forth herein. These instructions may be sub-divided into sub-routines and/or stored in one or more files that may be linked statically or dynamically.

The carrier of a computer program may be any entity or device capable of carrying the program. For example, the carrier may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. In the present disclosure, the expression "at least one of A, B and C" means "A, B, and/or C", and that it suffices if, for example, only B is present. A single element or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A medical system (100) comprising:
a plurality of medical devices (110); and
a control device (200) comprising:
a voice input unit (115) configured to receive a voice input (112); and
a processor (125) configured to communicate with the voice input unit (115) and the plurality of medical devices (110), wherein the processor (125) is configured to:
transmit a query signal (116) corresponding to the voice input (112) to at least one medical device from the plurality of medical devices (110);
receive a response signal (120) from the at least one medical device in response to the query signal (116), wherein the response signal (120) comprises a negative response (122) if the at least one medical device is incapable of performing a predetermined action (150) in response to the voice input (112), or a positive response (124) if the at least one medical device is capable of performing the predetermined action (150) in response to the voice input (112); and
transmit a command signal (130) to the at least one medical device upon receiving the response signal (120) comprising the positive response (124) from the at least one medical device, wherein the at least one medical device is configured to perform the predetermined action (150) upon receiving the command signal (130).

2. The medical system (100) of claim 1, wherein the processor (125) is further configured to:
transmit the query signal (116) to at least one remaining medical device from the plurality of medical devices (110) upon receiving the response signal (120) comprising the negative response (122) from the at least one medical device;
receive a response signal (120) from the at least one remaining medical device in response to the query signal (116), wherein the response signal (120) comprises a negative response (122) if the at least one medical device is incapable of performing a predetermined action (150) in response to the voice input (112), or a positive response (124) if the at least one medical device is capable of performing the predetermined action (150) in response to the voice input (112); and
transmit the command signal (130) to the at least one remaining medical device upon receiving the response signal (120) comprising the positive response (124) from the at least one remaining medical device.

3. The medical system (100) of claim 1, wherein the at least one medical device comprises each of the plurality of medical devices (110), and wherein the processor (125) is further configured to:
timely parallelly transmit the query signal (116) corresponding to the voice input (112) to each of the plurality of medical devices (110); and
receive the response signal (120) from each of the plurality of medical devices (110) in response to the query signal (116), the response signal (120) comprising the negative response (122) if a corresponding medical device from the plurality of medical devices (110) is incapable of performing the predetermined action (150) in response to the voice input (112), or the positive response (124) if the corresponding medical device is capable of performing the predetermined action (150) in response to the voice input (112).

4. The medical system (100) according to any one of the claims 1 to 3, wherein the processor (125) is further configured to:
receive a response signal (120) comprising the positive response (124) from each of a set of medical devices (250, 350) from the plurality of medical devices (110);
select one medical device from the set of medical devices (250, 350) based on at least one parameter (400); and
transmit the command signal (130) to the one medical device from the set of medical devices (250, 350).

5. The medical system (100) of claim 4, wherein the at least one parameter (400) comprises at least one of a user input (410), a prior history of selection (420), a predetermined hierarchy (430) of the set of medical devices (250, 350), a time of installation (440) of each of the set of medical devices (250, 350), a type of connection (450) between the processor (125) and each of the set of medical devices (250, 350), a proximity (460) of each of the set of medical devices (250, 350) to the voice input unit (115), and a proximity (470) of each of the set of medical devices (250, 350) to a desired location for performing the predetermined action (150).

6. The medical system (100) of claim 1, wherein the processor (125) is further configured to:
upon receiving the response signal (120) comprising the negative response (122) from the at least one medical device, timely sequentially transmit the query signal (116) to remaining medical devices from the plurality of medical devices (110) if the response signal (120) from a previous medical device from the remaining devices comprises the negative response (122); and
transmit the command signal (130) to one of the remaining medical devices if the response signal (120) from the one of the remaining medical devices comprises the positive response (124).

7. The medical system (100) according to any one of the claims 1 to 6, wherein the processor (125) is further configured to:
generate a transcription (512) based on the voice input (112); and
generate the query signal (116) based on the transcription (512).

8. The medical system (100) of claim 7, wherein the processor (125) is further configured to generate a synthesized speech signal (513) based on the transcription (512), and wherein the query signal (116) comprises the synthesized speech signal (513).

9. The medical system (100) according to any one of the claims 1 to 7, wherein one of the plurality of medical devices (110) is the control device (200).

10. A computer-implemented method (700) for controlling a plurality of medical devices (110), the computer-implemented method (700) comprising:
receiving a voice input (112);
transmitting a query signal (116) corresponding to the voice input (112) to at least one medical device from the plurality of medical devices (110);
receiving a response signal (120) from the at least one medical device in response to the query signal (116), wherein the response signal (120) comprises a negative response (122) if the at least one medical device is incapable of performing a predetermined action (150) in response to the voice input (112), and wherein the response signal (120) comprises a positive response (124) if the at least one medical device is capable of performing the predetermined action (150) in response to the voice input (112); and
transmitting a command signal (130) to the at least one medical device upon receiving the response signal (120) comprising the positive response (124) from the at least one medical device, wherein the at least one medical device is configured to perform the predetermined action (150) upon receiving the command signal (130).

11. The computer-implemented method (700) of claim 10, further comprising:
transmitting the query signal (116) to at least one remaining medical device from the plurality of medical devices (110) upon receiving the response signal (120) comprising the negative response (122) from the at least one medical device;
receiving a response signal (120) from the at least one remaining medical device in response to the query signal (116), wherein the response signal (120) comprises a positive response (124) if the at least one remaining medical device is capable of performing a predetermined action (150) in response to the voice input (112), or a negative response (122) if the at least one remaining medical device is incapable of performing the predetermined action (150); and
transmitting the command signal (130) to the at least one remaining medical device upon receiving the response signal (120) comprising the positive response (124) from the at least one remaining medical device.

12. The computer-implemented method (700) of claim 10, wherein:
transmitting the query signal (116) corresponding to the voice input (112) to the at least one medical device from the plurality of medical devices (110) comprises timely parallelly transmitting the query signal (116) corresponding to the voice input (112) to each of the plurality of medical devices (110); and
receiving the response signal (120) from the at least one medical device in response to the query signal (116) comprises receiving the response signal (120) from each of the plurality of medical devices (110) in response to the query signal (116), the response signal (120) comprising the negative response (122) if a corresponding medical device from the plurality of medical devices (110) is incapable of performing the predetermined action (150) in response to the voice input (112), or the positive response (124) if the corresponding medical device is capable of performing the predetermined action (150) in response to the voice input (112).

13. The computer-implemented method (700) according to any one of the claims 10 to 12, further comprising:
receiving the response signal (120) comprising the positive response (124) from each of a set of medical devices (250, 350) from the plurality of medical devices (110);
selecting one medical device from the set of medical devices (250, 350) based on at least one parameter (400); and
transmitting the command signal (130) to the one medical device from the set of medical devices (250, 350).

14. The computer-implemented method (700) of claim 10, further comprising:
upon receiving the response signal (120) comprising the negative response (122) from the at least one medical device, timely sequentially transmitting the query signal (116) to remaining medical devices from the plurality of medical devices (110) if the response signal (120) from a previous medical device from the remaining devices comprises the negative response (122); and
transmitting the command signal (130) to one of the remaining medical devices if the response signal (120) from the one of the remaining medical devices comprises the positive response (124).

15. A computer program product comprising a computer readable medium having computer readable code embodied therein, the computer readable code being configured such that, on execution by a suitable computer or processing unit, the computer or processing unit is caused to perform the computer-implemented method (700) according to any one of the claims 10 to 14.
